# EUROPEAN PATENT APPLICATION

(11) **EP 4 779 258 A1**
(43) Date of publication of application: **22.07.2026**
(21) Application number: 25153142.2
(22) Date of filing: 21.01.2025
(51) Int. Cl.: G01B 3/56

(54) **BEVEL SQUARE**

(71) Applicant: Hultafors Group AB, 517 21 Bollebygd (SE)
(72) Inventor: ANDERSSON, Göran, 50457 Borås (SE)
(74) Representative: AWA Sweden AB

(57) **Abstract**

The present disclosure relates to a bevel square (100) comprising a blade (10), a handle (20), a connecting element (30) configured to extend through said handle (20), and a rod (40) configured to extend in said handle (20), wherein said rod (40) is further configured to extend to said connecting element (30). The bevel square further comprises a fastening element (50) configured to engage with said rod (40) to cause an axial displacement of the rod (40). The axial displacement of the rod (40) causes a transversal displacement of the connecting element (30) to lock the blade (10) relative to the handle (20) when said axial displacement of the rod (40) occurs in a locking direction, and to unlock the blade (10) when said axial displacement of the rod (40) occurs in a releasing direction.

## Description

### Technical field

The present invention relates to a bevel square as well as to a method of locking a blade in a bevel square.

### Background

A bevel square is a tool commonly used in carpentry for setting and transferring angles to workpieces. A typical bevel square comprises a handle or stock and a blade having a positioning slot along part of its length. The blade is connected to the handle by a connecting element, e.g., a bolt, passing through the positioning slot of the blade and portions of the handle between which the blade is arranged. The handle can thus be positioned along the positioning slot and pivoted to any angle relative to the blade. A locking mechanism allows the blade and handle to be locked in position. In use, an angle is copied by placing the blade and handle along respective edges, for example a board edge and a cut angle, and locking the blade into this position. The angle can then be transferred and marked on a different piece to be cut at the same angle.

The blade is typically locked in position by clamping, i.e., the portions of the handle between which the blade is arranged are brought together to clamp the blade in position. To this end, the connecting element passing through the positioning slot and handle may, for example, be a thumb screw, or be a bolt cooperating with a wing nut to bring the portions of the handle together. I other examples, a thumb screw having a conical end may extend lengthwise inside the handle. By turning the thumb screw, the conical end presses on a tapered part of the connecting element, which in turn brings the portions of the handle together to hold the blade.

To accurately set and transfer angles, a locking mechanism providing a high clamping force, as well as being easy to lock and release, is desirable. Further, increased wear resistance of the locking mechanism is always desirable.

### Summary

In view of the above, an object of the present disclosure is to provide an improved bevel square.

According to a first aspect of the inventive concept, there is provided a bevel square comprising a blade, a handle, a connecting element, and a rod. The blade comprises a positioning slot. The handle comprised a blade receiving slot. The connecting element is configured to extend through the positioning slot and the handle. The rod is configured to extend along a longitudinal axis in the handle, and is further configured to extend to said connecting element.

The bevel square further comprises a fastening element configured to rotationally engage with the rod to cause an axial displacement of the rod along said longitudinal axis.

The rod comprises a first operating surface and the connecting element comprises a second operating surface, which first and second operating surfaces are configured to engage such that the axial displacement of the rod causes a transversal displacement of the connecting element to lock the blade relative to the handle when said axial displacement occurs in a locking direction, and to unlock the blade when the axial displacement of the rod occurs in a releasing direction.

The blade may be arranged in the blade receiving slot of the handle.

Thus, the rod may be displaced to a locking position whereby a transversal displacement of the connecting element locks the blade relative to the handle. The rod may be displaced to an unlocking (or releasing) position, whereby a transversal displacement of the connecting element unlocks (or releases) the blade.

A bevel square may also be referred to as a sliding bevel, a sliding bevel square, a sliding T-bevel, a bevel gauge, a sliding bevel gauge, etc. The handle may also be referred to as a stock.

The separate fastening element causing the axial displacement of the rod allows the rod to be displaced without rotation of the rod about its axis. The present inventive concept is at least partly based on the understanding that such a configuration allows for a more effective connection between the first and second operating surfaces, i.e., the respective operating surfaces of the rod and the connecting element. The clamping force obtained to lock the blade in place may be increased, thus providing for a more accurate transfer of angles.

The fastening element may be a threaded fastening element and said rod may comprise a threaded portion. The threaded fastening element may be configured to engage with said threaded portion of the rod.

The blade receiving slot may be arranged between a first portion and a second portion of the handle. The first portion may comprise a first opening and said second portion may comprise a second opening, the connecting element being further configured to extend through said first opening and said second opening.

The connecting element may further comprise a third opening and said rod may be configured to extend through said third opening.

According to at least an example embodiment, the threaded portion of the rod is arranged at a first end of the rod and the first operating surface is arranged a second end of the rod, opposite the first end.

Thereby, the threaded fastening element may be arranged at an opposite end of the handle with respect to the connecting element. This avoids interference with the blade, irrespective of a position of the blade, when manipulating the threaded fastening element to lock or release the blade.

According to at least one example embodiment, the locking direction is the direction along the longitudinal axis going from the second end of the rod to the first end of the rod, and the releasing direction is the direction along the longitudinal axis going from the first end of the rod to the second end of the rod.

With such an arrangement, the blade is locked into position when the rod is pulled towards the threaded fastening element, and released (unlocked) when the rod is pushed away from the threaded fastening element.

Further, this allows the rod to be separated from the threaded fastening element for disassembly of the bevel square.

According to at least one example embodiment, the first operating surface and the second operating surface each comprise a respective planar portion. The first operating surface and the second operating surface may each be a sloped surface.

Thereby, an increased contact surface between the first operating surface and the second operating surface may be obtained. This may decrease the wear on the connecting element and/or on the rod.

According to at least one example embodiment, said first operating surface forms an angle of 5° to 30°, or 8° to 25°, or 10° to 20°, or 12° to 15° with respect to said longitudinal axis.

This provides a good balance between the clamping force for locking the blade, and the required displacement of the rod. A lower angle provides for a higher clamping force, but requires a larger displacement of the rod. In other words, more rotation of the threaded fastening element is required.

The second operating surface may be parallel to the first operating surface.

According to at least one example embodiment, the fastening element comprises female thread and the threaded portion of the rod comprises male thread.

According to at least one example embodiment, the fastening element extends partly in a cavity or inner space of the handle.

This may provide for a stable arrangement. Further, the threaded portions of the rod and fastening element are protected.

According to at least one example embodiment, said fastening element comprises a front facing bearing surface configured to directly or indirectly engage with the handle when said fastening element is rotated to cause an axial displacement of the rod in the locking direction, thereby preventing a displacement of the fastening element along said longitudinal axis.

This prevents a displacement of the fastening element, at least when the front facing bearing surface is in (direct or indirect) contact with the handle. In other words, when rotating the fastening element in the locking direction, the fastening element may be displaced relative to the rod, and relative to the handle. Once the front facing bearing surface engages with the handle, further displacement of the fastening element is prevented. Thus, the axial displacement of the rod is facilitated. The front facing bearing surface may be configured to directly engage with a surface of the handle. Alternatively, the front facing bearing surface may be configured to engage with the handle via an intermediate element, such as, for example, a washer.

According to at least one embodiment, said fastening element comprises a rear facing bearing surface configured to directly or indirectly engage with the handle when said fastening element is rotated to cause an axial displacement of the rod in the releasing direction, thereby preventing a displacement of the fastening element along said longitudinal axis.

This prevents a displacement of the fastening element, at least when the rear facing bearing surface is in (direct or indirect) contact with the handle. In other words, when rotating the fastening element in the releasing direction, the fastening element may be displaced relative to the rod, and relative to the handle. Once the rear facing bearing surface engages with the handle, further displacement of the fastening element relative to the handle is prevented. Thus, the axial displacement of the rod is facilitated. The rear facing bearing surface may be configured to directly engage with a surface of the handle. Alternatively, the rear facing bearing surface may be configured to engage with the handle via an intermediate element, such as, for example, a washer.

In configurations where the fastening element extends partly in a cavity of the handle, the front bearing surface and/or the rear bearing surface of the fastening element may be configured to engage with a respective internal surface of the handle.

According to at least one embodiment, said fastening element comprises a protrusion extending radially along at least a portion of the circumference of the fastening element, wherein said rear facing bearing surface is arranged on said protrusion.

This allows the rear facing bearing surface to be arranged at a desired position along the fastening element. In turn this may allow for a compact design of the bevel square.

According to at least one embodiment, the connecting element comprises a head configured to engage with a surface of the handle at the periphery of the first opening.

This allows the connecting element to exert a force on the first portion of the handle at a greater distance from a central axis of the connecting element. This may increase the clamping force on the blade.

According to a further aspect of the inventive concept there is provided a method for locking a blade in a bevel square, wherein said bevel square comprises a handle comprising a blade receiving slot, a blade comprising a positioning slot, a connecting element configured to extend through the handle and the positioning slot, a rod configured to extend along a longitudinal axis in the handle, the rod being further configured to extend to the connecting element, and a fastening element configured to rotationally engage with the rod, wherein the rod comprises a first operating surface and the connecting element comprises a second operating surface.

The method comprises: rotating said fastening element, displacing the rod along said longitudinal axis, engaging said second operating surface with said first operating surface, and transversally displacing said connecting element to lock the blade relative to the handle.

The method according to the further aspect may advantageously be performed by a bevel square according to the first aspect. All advantages and embodiments described in connection with the first aspect apply equally to the second aspect.

### Brief description of the drawings

Aspects of the present inventive concept will now be described in more detail with reference to the drawings, in which:
- Fig. 1: is a perspective illustration of the bevel square according to an embodiment;
- Fig. 2: is a schematic cross-section view of the bevel square according to an embodiment;
- Fig. 3: is a side view illustration of the blade;
- Fig. 4: is a perspective illustration of the connecting element;
- Fig. 5: is a perspective illustration of the rod;
- Fig. 6: is a perspective illustration of the handle;
- Fig. 7: is a perspective illustration of the fastening element;
- Figs. 8a-b: are side views of the bevel square with the blade set at different angles; and
- Fig. 9: is a flow chart illustrating a method according to the present inventive concept.

### Detailed description

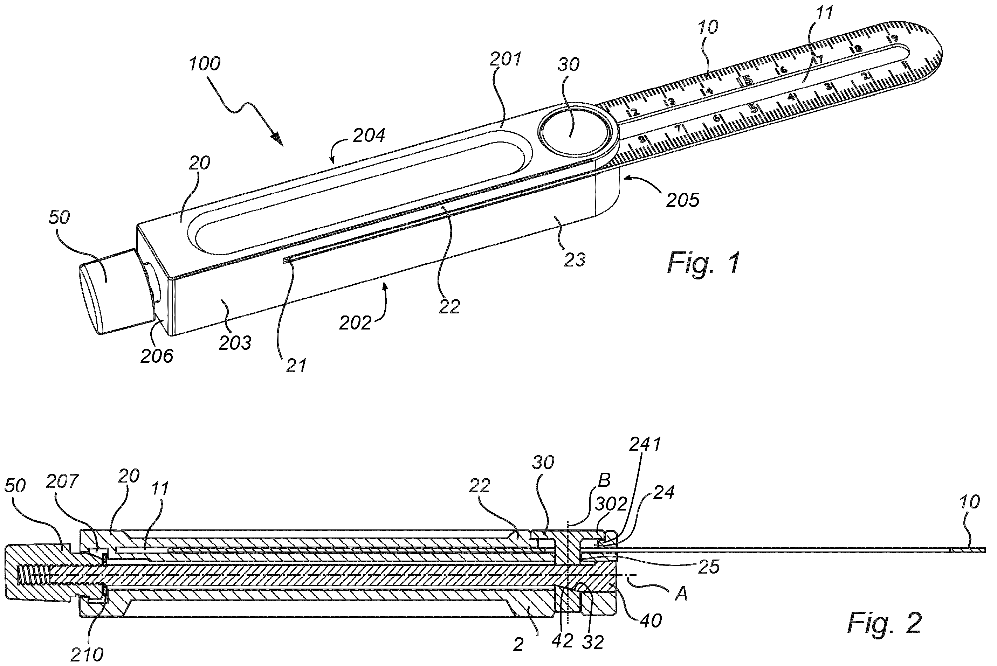

An embodiment of the bevel square 100 according to the present disclosure is illustrated in perspective in Fig. 1. The bevel square 100 comprises an elongated blade 10, a handle 20, a connecting element 30, a fastening element 50, and a rod 40 (not visible in Fig. 1). The handle 20 may also be referred to as the stock 20.

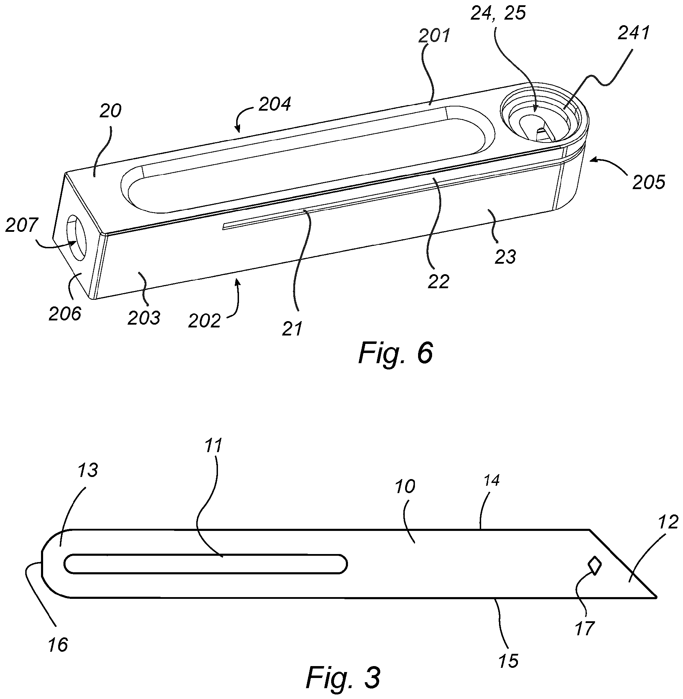

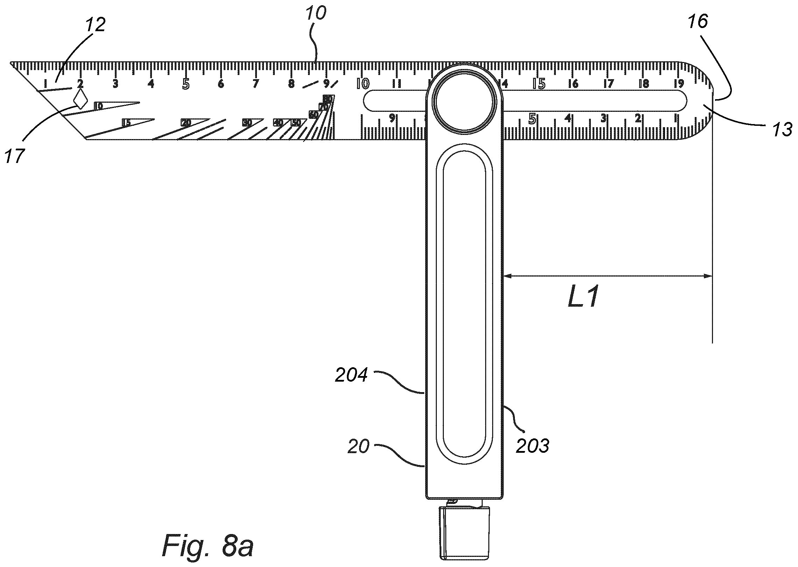

As illustrated in Fig. 3, the elongated blade 10 comprises an angled or pointed end 12, and a generally rounded end 13. A first long edge 14 and a second long edge 15 extend parallel to each other between the respective ends 12, 13 of the blade 10. The blade 10 further comprises a positioning slot 11 extending along the longitudinal extension of the blade 10. In the present example, the positioning slot 11 is centered between the respective long edges 14, 15, and extends from near the generally rounded end 13 to approximately the midpoint of the blade 10. The blade 10 in Fig. 3 is shown without graduation, although the blade 10 may optionally comprise graduation, as illustrated in Fig. 1 and Figs. 8a-8b.

With further reference to Fig. 6, the handle may have a top side 201, a bottom side 202, a first lateral side 203, a second lateral side 204, a front side 205, and a rear side 206.

The handle comprises a slot 21, or internal space 21, arranged between a first portion 22 and a second portion 23 of the handle 20. As illustrated, the first portion 22 and second portion 23 of the handle 20 may be parallel. Thus, in the example of Fig. 1, the slot 21 extends generally parallel to the top side 201 and bottom side 202 of the handle 20, with the slot 21 being opened to the first 203 and second 204 lateral sides as well as to the front side 205 of the handle 20. The first portion 22 and second portion 23 of the handle are connected towards the rear side 206 of the handle.

The blade 10 is arranged in the slot 21 between the first portion 22 and the second portion 23 of the handle 20. The connecting element 30 is arranged to pass through the first portion 22 and the second portion 23 of the handle 20, as well as through the positioning slot 11 of the blade 10. Thereby, the bevel square 100 can be set to a desired relative position and angle between the handle 20 and the blade 10 by a sliding movement along the positioning slot 11 and rotation of the blade 10 about the connecting element 30.

In more detail, the first portion 22 and second portion 23 of the handle comprise a first opening 24 and a second opening 25, respectively, which are aligned and arranged to receive the connecting element 30 therethrough. The first opening 24 of the first portion 22 and the second opening 25 of the second portion thus together form a through opening, extending from the top side 201 to the bottom side 202 of the handle.

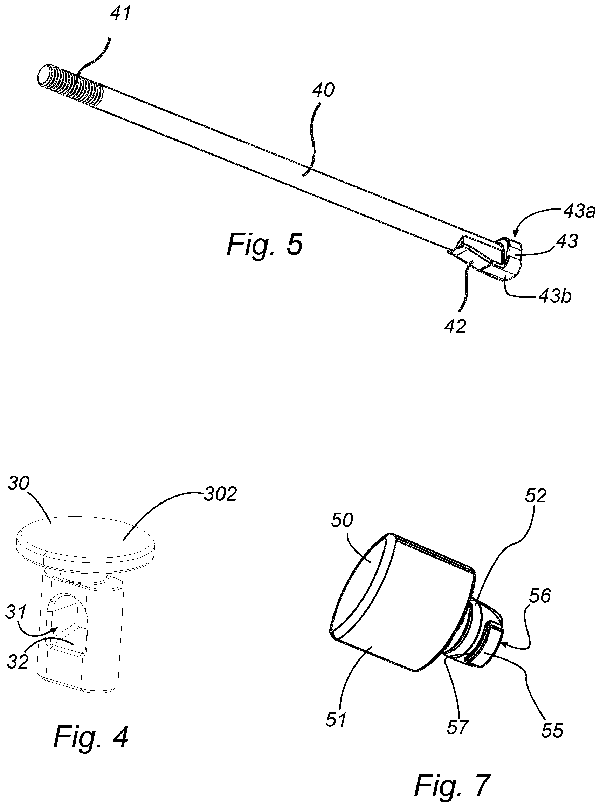

As shown in Fig. 4, the connecting element 30 comprises an enlarged head 302. The first opening 24 is correspondingly enlarged on the top side 201, such that the connecting element 30 may be flush with the top side 201 of the handle when received in the first opening 24 and second opening 25. The upper part of the first opening 24 comprises a ridge 241, on which the underside of the enlarged head 302 of the connecting element 30 may rest.

Thus, in use, the blade 10 is set to a desired position relative to the handle 10, i.e., position of the connecting element 30 along the positioning slot 11, and angle of the blade 10 relative to the handle 20. Once the blade 10 is set to the desired position, its position is locked by rotating the fastening element 50 in a first (locking) direction. The blade 10 is released by rotating the fastening element 50 in a second (releasing) direction. Typically, the first direction may be a clock-wise rotation and the second direction may be a counter clock-wise rotation.

The blade 10 is locked into position by clamping of the blade 10 between the first portion 22 and the second portion 23 of the handle 20. The locking mechanism will be explained in further detail below with reference to Fig. 2.

The fastening element 50 is arranged at the rear end 206 of the handle 20. The fastening element 50 comprises a handle portion configured to be gripped by a hand/fingers of a user for rotating the fastening element 50. In the embodiment of Fig. 1, the handle portion of the fastening element 50 has an almond shaped cross-section. Different shapes are however possible.

Fig. 2 shows a schematic cross-section view of the bevel square 100 of Fig. 1. As described above, the connecting element 30 is arranged to extend through the first opening 24 in the first portion 22 of the handle 20, and through the second opening 25 in the second portion 23 of the handle 20. Further, the connecting element 30 extends through the positioning slot 11 of the blade 10. When so arranged, the connecting element 30 extends generally along a central axis B perpendicular to the top side 201 and bottom side 202 of the handle, and thus also perpendicular to the blade 10.

The handle 20 further comprises a second internal space 207 adapted to receive the rod 40. This second internal space 207 extends from the front end 205 of the handle 20 to the rear end 206, in the second portion 23 of the handle 20. Further, the second internal space 207 is arranged such that when the rod 30 is received therein, the rod 40 extends through an opening 31 of the connecting element 30.

With reference also to Figs. 4 and 5, in the present example the rod 40 has a generally cylindrical shape and extends along a longitudinal axis A. Preferably, when arranged in the second internal space 207, the rod 40 extends parallel to the blade 10. Thus, in the assembled bevel square 100, the longitudinal axis A of the rod is preferably perpendicular to the axis B of the connecting element 30.

The rod 40 comprises a threaded portion 41 arranged at a first end of the rod. At a second end of the rod 40, opposite the first end, the rod 40 comprises a first operating surface 42. At the opening 31, the connecting element 30 comprises a second operating surface 32. The first operating surface 42 and the second operating surface 32 comprise respective planar portions. Further, the first operating surface 42 and the second operating surface 32 are configured to engage such that a longitudinal displacement of the rod 40 (i.e., along its axis A) causes a transversal displacement of the connecting element 30 (i.e., along its axis B).

The first operating surface 42 and the second operating surface 32 may form corresponding angles with respect to the longitudinal axis A and the axis B, to maximise the contact surface between the first operating surface 42 and the second operating surface 32. For example, in a configuration in which the longitudinal axis A of the rod 40 and the central axis B of the connecting element 30 are perpendicular, the first operating surface 42 may be configured to have an angle α with respect to the longitudinal axis, and the second operating surface 32 may be configured to have an angle β=90+α with respect to the central axis B of the connecting element 30.

The first operating surface 42 may be configured with a angle of 5 to 30 with respect to the longitudinal axis A of the rod 40. Thus, the second operating surface 32 may be configured with a corresponding angle of 95 to 120 with respect to the central axis B of the connecting element 30.

A large contact surface between the first operating surface 42 and the second operating surface 32 may be advantageous in terms of reduced wear on the respective components. In particular, some lubrication may be used on the first 42 and second 32 operating surfaces to provide a lubricant film between the surfaces. With a smaller contact surface and for a given force, the pressure increases. At higher pressure, the lubricant may be displaced, resulting in increased wear.

The fastening element 50 comprises a threaded portion. In this example, the fastening element 50 comprises female thread adapted to engage with male thread of the threaded portion 41 of the rod 40.

In this example, the fastening element 50 extends partly in the second internal space 207 of the handle 20. More specifically, a portion of the fastening element 50 extends in the second internal space 207 of the handle 20, while the handle portion of the fastening element 50 is arranged on the outside of the handle 20.

The portion 52 of the fastening element 50 which extends in the second internal space 207 of the handle 20 may have a generally cylindrical shape. As is more clearly shown in the perspective illustration of Fig. 7, the fastening element 50 may further comprise a protrusion 55 extending radially and along at least a part of the circumference of the fastening element. This protrusion 55 may be arranged at the end of the fastening element 50 opposite the handle portion.

The threaded portion 41 of the rod 40 and the thread of the fastening element 50 are configured such that a rotation of the fastening element 50 in the first direction induces a longitudinal displacement of the rod 40 towards the fastening element 50.

When rotating the fastening element 50 in a first (locking) direction to lock the blade 10, the rod 40 is displaced along its longitudinal axis A. In this example, in relation to the handle 20 the rod 40 is displaced in the direction going from the front end 205 of the handle 20 to the rear end 206 of the handle 20. With this displacement, the first operating surface 42 of the rod engages with the second operating surface 32 of the connecting element 30. The first operating surface 42 and the second operating surface 32 are oriented such that the displacement of the rod 40 along the longitudinal axis A causes a transversal displacement of the connecting element 30 along central axis B, in a direction going from the top side 201 of the handle 20 towards the bottom side 202 of the handle 20. The head 302 of the connecting element 30 thereby presses on the ridge 241, producing a clamping force on the blade 10 between the first portion 22 and the second portion 23 of the handle 20. An end structure 43 of the rod 40 comprises an upper surface 43a and a lower surface 43b providing support for respective inner surfaces of the handle 20 at the opening of the second internal space 207 at the front end 205 of the handle 20.

Conversely, when rotating the fastening element 50 in a second (releasing) direction to release the blade 10, the rod 40 is displaced along its longitudinal axis A in the opposite direction. In this example, when releasing the blade 10, the rod 40 is thus displaced in relation to the handle 20 in a direction going from the rear end 206 of the handle 20 to the front end 205 of the handle 20.

This configuration enables easy disassembly of the bevel square 1, for example for cleaning purposes, or to replace a component. The fastening element 50 may simply be rotated in the second (releasing) direction until the threaded portion 41 of the rod 40 disengages from the fastening element 50, whereupon the rod 40 may be pulled out of the handle 20. This in turn allows the connecting element 30, the blade 10, and the fastening element 50 to be separated from the handle 20.

With this configuration, the force applied by the head of the connecting element 30 on the ridge 241 and thus on the first portion 22 of the handle 20, is positioned away from the central axis B of the connecting element 30. The force is also evenly distributed along the ridge 241. The clamping force is thus provided over a larger area and is more evenly distributed.

The angle α of the first operating surface 42 (and β of the second operating surface 32) may also affect the clamping force provided on the blade 10. For a given force applied by the rod 40 on the connecting element 30, the component of the force along the central axis B will increase with a decreasing angle α. It may therefore be easier to provide a higher clamping force the smaller the angle α is. This will however require a larger displacement of the rod 30 along the longitudinal axis A, thus more rotation of the fastening element 50.

Expressed differently, a smaller angle α increases the ratio between the clamping force and the torque needed on the fastening element 50 to provide this clamping force.

Conversely, with a larger angle α, a smaller displacement of the rod 40 may be needed. However, a larger torque of the fastening element 50 may be needed to obtain the same clamping force.

When rotating the fastening element 50, initially the fastening element 50 may be displaced relative to the rod 40 without any displacement of the rod relative to the connecting element 30 and the handle 20. Thus, when rotating the fasting element in the first direction (locking direction), the fastening element 50 may initially be displaced in the direction towards the front end 205 of the handle 20. However, when the fastening element 50 reaches an inner, rear facing surface of the handle, no more displacement of the fastening element 50 relative to the handle 20 in this direction is permitted, and thus the longitudinal displacement of the rod 40 relative to the connecting element 30 is ensured. Optionally, a washer 210 may be arranged around the rod 40 between the fastening element 50 and the inner rear facing surface of the handle 20. In other words, the fastening element 50 comprises a front facing bearing surface 56 which is configured to engage with the inner, rear facing surface of the handle 20, either directly, or indirectly via the optional washer.

When the blade 10 is locked, the rod 40 may be stuck in position by, e.g., the friction between the first operating surface 42 and the second operating surface 32, and/or forces on the end structure of the rod 40. Hence, when rotating the fastening element 50 in the second direction (releasing direction), the fastening element 50 may initially be displaced in the direction towards the rear end 206 of the handle 20. A longitudinal displacement of the rod 40 to release the blade 10 may be ensured by a rear facing bearing surface 57 configured to engage with the handle. In the present example, the rear facing bearing surface 57 is positioned on the protrusion 55 extending radially, along at least a portion of the circumference of the fastening element 50. As illustrated, the protrusion 55 may be arranged at the end of the fastening element 50 opposite the handle portion of the fastening element 50. The rear facing bearing surface 57 is here configured to engage with an inner, front facing surface of the handle. More specifically, the inner, front facing surface of the handle 20 may be on the edge or perimeter of the opening on the rear end 206 on the handle 20 through which the fastening element 50 extends.

Further, it should be noted that although in the example of the figures, the fastening element 50 extends partly in the second inner space 207 of the handle 50, this is optional. The fastening element 50 may alternatively be arranged externally to the handle 20.

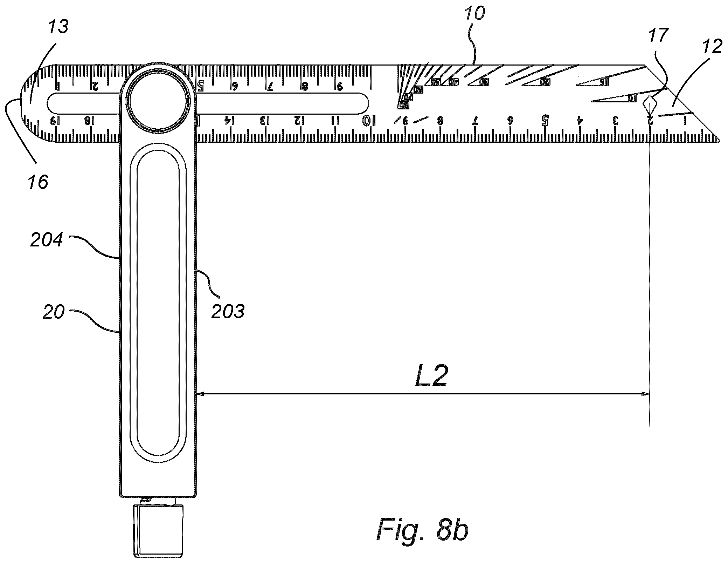

Fig. 8a and Fig. 8b show examples of the bevel square 1 with the blade 10 angled at 90° and 270°, respectively, with respect to (the lateral sides 203, 204 of) the handle 20. In other words, in both Fig. 8a and Fig. 8b, the blade 10 is perpendicular to the handle 20; in Fig. 8a, the angled end 12 of the blade 10 is on the side of the second lateral side 204 of the handle 20 and in Fig. 8b the angled end 12 of the blade is on the side of the first lateral side 203 of the handle 20.

The blade 10 having a generally rounded end 13 is useful for example when the blade 10 is pulled all the way so that the blade 10 is locked with the connecting element 30 positioned the closest possible to the rounded end 13. In this position (not shown in the figures), the blade 10 extends only on one side of the handle 20 (i.e., one of the lateral sides 204, 205) and does not protrude on the other side (i.e., the other one of the lateral sides 204, 205). Hence, one of the lateral sides 204, 205 of the handle 20 is a free side and the bevel square 100 can thus be positioned flat against another object on that free side.

The pointed or angled end 12, on the other hand, is useful for reading lengths, positioning the tip at a specific mark, or measuring depths, for example.

As shown in Fig. 3 as well as Figs 8a and 8b, the generally rounded end 13 of the blade 10 may have a flat portion. The flat portion may be in the form of a straight edge 16, the straight edge 16 preferably being perpendicular to the longitudinal edges 14, 15 of the blade 10. The straight edge 16 can for example be positioned against and along an edge of a workpiece. In combination with optional graduation on the blade 10 as illustrated in Fig. 8a, this enables measurement of a length L1 from the edge 16.

The blade 10 comprises a graduation starting at 0 at the straight edge 16. Here, millimetre graduation is illustrated; graduation in imperial units is of course also possible. The length from the straight edge 16 to the lateral side 203 of the handle 20 is thus easily obtained by reading on the graduation at the intersection with the lateral side 203.

In the illustrated example, the total length of the blade 10 from the straight edge 16 to the point of the angled end 12 of the blade 10 is 200 mm. The blade 10 may be positioned such that the length between the straight edge 16 and the lateral side 203 of the handle 20 is approximately 0-85 mm.

The blade 10 further comprises a notch 17 arranged at the angled end 12 of the blade 10. The notch 17 may be used for several purposes, including measuring, marking or scribing, and cutting. In the example of Fig. 8b, the notch 17 is placed with the centre of the notch at 20 mm from the point.

The blade 10 may thus be positioned and locked at a desired distance between the notch 17 and the lateral side of the handle 20. The blade 10 may be positioned such that the length L2 between the centre of the notch 17 and the lateral side 203 of the handle 20 is approximately 70-160 mm.

Further, as illustrated in Figs. 8a and 8b, the blade may also optionally comprise an angular graduation. This facilitates setting the blade to a desired angle relative to the handle.

The handle 20 may manufactured in one piece or, alternatively, be assembled from e.g., two pieces. According to an example, the handle 20 may be made of aluminium (or aluminium alloy). An aluminium handle 20 may be anodised. The handle 20 may made by extrusion and/or machining. Alternatively, the handle 20 may be made of a polymer material, for example by injection moulding.

The blade 10 may, for example, be made of stainless steel. The optional graduation may be laser engraved.

The connecting element 30 may, for example, be made by upset forging, optionally of steel. The opening of the connecting element may be machined.

Alternatively, the connecting element 30 may be made of zinc, for example by die casting. As a further alternative, the connecting element 30 may be made of a polymer material.

The fastening element 50 may be made of zinc, for example by die casting. The fastening element 50 may alternatively be made of a polymer material.

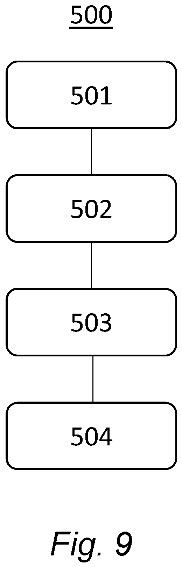

A method 500 of locking a blade in a bevel square is illustrated in the flow chart of Fig. 9.

The method may be performed by a bevel square according to any embodiment described above.

Thus the bevel square comprises a handle 20 comprising a blade receiving slot 21, a blade 10 comprising a positioning slot 11, a connecting element 30 configured to extend through the handle 20 and the positioning slot 11, a rod 40 configured to extend along a longitudinal axis A in the handle 20, the rod being further configured to extend to the connecting element 30, and a fastening element 50 configured to rotationally engage with the rod 40. The rod 40 comprises a first operating surface 42 and the connecting element 30 comprises a second operating surface 32.

The method comprises the steps of:
rotating 501 the fastening element;
displacing 502 the rod along the longitudinal axis A;
engaging 503 the second operating surface 32 with the first operating surface 42; and
transversally displacing the connecting element 30 to lock the blade 10 relative to the handle 20.

Whilst the invention is susceptible to various modifications and alternative forms, specific embodiments are shown by way of example in the drawings as herein described in detail. It should be understood, however, that the detailed description herein and the drawings attached hereto are not intended to limit the invention to the particular form disclosed. Rather, the intention is to cover all modifications, equivalents, and alternatives falling within the scope of the appended claims.

As used in this specification, the words "comprise", "comprising", and similar words are not to be interpreted in the exclusive or exhaustive sense. In other words, they are intended to mean "including, but not limited to".

## Claims

1. A bevel square (100) comprising:
a blade (10) comprising a positioning slot (11),
a handle (20) comprising a blade receiving slot (21),
a connecting element (30) configured to extend through said positioning slot (11) and said handle (20), and
a rod (40) configured to extend along a longitudinal axis (A) in said handle (20), wherein said rod (40) is further configured to extend to said connecting element (30),
wherein
said bevel square further comprises a fastening element (50) configured to rotationally engage with said rod (40) to cause an axial displacement of the rod (40) along said longitudinal axis (A),
wherein said rod (40) comprises a first operating surface (42) and said connecting element (30) comprises a second operating surface (32), which first (42) and second (32) operating surfaces are configured to engage such that said axial displacement of the rod (40) causes a transversal displacement of the connecting element (30) to lock the blade (10) relative to the handle (20) when said axial displacement of the rod (40) occurs in a locking direction, and to unlock the blade (10) when said axial displacement of the rod (40) occurs in a releasing direction.

2. A bevel square according to claim 1, wherein said fastening element (50) is a threaded fastening element (50) and said rod comprises a threaded portion (41), wherein said threaded fastening element (50) is configured to engage with said threaded portion (41) of the rod (40).

3. A bevel square according to claim 1 or 2,
wherein said blade receiving slot (21) is arranged between a first portion (22) and a second portion (23) of said handle, wherein said first portion (22) comprises a first opening (24) and said second portion (23) comprises a second opening (35), wherein said connecting element (30) is further configured to extend through said first opening (24) and said second opening (25), and
wherein said connecting element further comprises a third opening (31) and said rod (40) is configured to extend through said third opening (31).

4. A bevel square according to claim 3, wherein said connecting element is adapted to bring said first portion (22) and said second portion (23) of the handle together to lock the blade (10) relative to the handle when said axial displacement of the rod (40) occurs in the locking direction, and to release said first portion (22) and said second portion (23) of the handle when said axial displacement occurs in said releasing direction.

5. A bevel square according to any one of claims 2 to 4, wherein said threaded portion of the rod is arranged at a first end of said rod and said first operating surface is arranged at a second end of said rod, opposite the first end.

6. A bevel square according to claim 5, wherein said locking direction is the direction along the longitudinal axis going from the second end of the rod to the first end of the rod, and said releasing direction is the direction along the longitudinal axis going from the first end of the rod to the second end of the rod.

7. A bevel square according to any one of the preceding claims, wherein said first operating surface and said second operating surface each comprises a respective planar portion.

8. A bevel square according to claim 4, wherein said first operating surface forms an angle of 5° to 30°, or 8° to 25°, or 10° to 20°, or 12° to 15° with respect to said longitudinal axis.

9. A bevel square according to anyone of claims 2 to 8, wherein said fastening element comprises female thread and said threaded portion of the rod comprises male thread.

10. A bevel square according to any one of the preceding claims, wherein said fastening element extends partly in a cavity or inner space of said handle.

11. A bevel square according to any one of the preceding claims, wherein said fastening element comprises a front facing bearing surface configured to directly or indirectly engage with the handle when said fastening element is rotated to cause an axial displacement of the rod in the locking direction, thereby preventing a displacement of the fastening element along said longitudinal axis.

12. A bevel square according to any one of the preceding claims, wherein said fastening element comprises a rear facing bearing surface configured to directly or indirectly engage with the handle when said fastening element is rotated to cause an axial displacement of the rod in the releasing direction, thereby preventing a displacement of the fastening element along said longitudinal axis.

13. A bevel square according to claim 12, wherein said fastening element comprises a protrusion extending radially along at least a portion of the circumference of the fastening element, wherein said rear facing bearing surface is arranged on said protrusion.

14. A bevel square according to any one of the preceding claims, wherein said connecting element comprises a head configured to engage with a surface of the handle at the periphery of said first opening.

15. A method (500) of locking a blade in a bevel square, wherein said bevel square comprises a handle (20) comprising a blade receiving slot (21), a blade (10) comprising a positioning slot (11), a connecting element (30) configured to extend through the handle (20) and the positioning slot (11), a rod (40) configured to extend along a longitudinal axis (A) in the handle (20), the rod being further configured to extend to the connecting element (30), and a fastening element (50) configured to rotationally engage with the rod (40), wherein the rod (40) comprises a first operating surface (42) and the connecting element (30) comprises a second operating surface (32),
the method (500) comprising:
rotating (501) said fastening element (50),
displacing (502) the rod (40) along said longitudinal axis (A)
engaging (503) said second operating surface (32) with said first operating surface (42), and
transversally displacing (504) said connecting element (30) to lock the blade (10) relative to the handle (20).
